# EUROPEAN PATENT SPECIFICATION

(11) **EP 3 421 268 B1**
(45) Date of publication and mention of the grant of the patent: **11.11.2020**
(21) Application number: 18158140.6
(22) Date of filing: 22.02.2018
(51) Int. Cl.: B60C 15/00, B60C 9/22, B60C 9/09

(54) **TIRE FOR TWO-WHEELED AUTOMOTIVE VEHICLE**
REIFEN FÜR EIN ZWEIRÄDRIGES AUTOMOBILES FAHRZEUG
PNEU POUR UN VÉHICULE AUTOMOBILE À DEUX ROUES

(30) Priority: 28.06.2017 JP 2017125858
(43) Date of publication of application: 02.01.2019
(73) Proprietor: Sumitomo Rubber Industries, Ltd., Kobe-shi Hyogo-ken (JP)
(72) Inventor: JO, Hiroshi, Kobe-shi Hyogo 651-0072 (JP)
(74) Representative: Manitz Finsterwald Patent- und Rechtsanwaltspartnerschaft mbB

(56) References cited:
- EP-A1- 0 635 383
- EP-A1- 2 196 328
- EP-A1- 2 899 042

## Description

This application claims priority on Patent Application No. 2017-125858 filed in JAPAN on June 28, 2017.

### BACKGROUND OF THE INVENTION

### Field of the Invention

The present invention relates to pneumatic tires to be mounted to two-wheeled automotive vehicles.

### Description of the Related Art

In a two-wheeled automotive vehicle, stiffness of a tire is adjusted in view of straight running stability, cornering performance, ride comfort, and the like. Change of a structure of a carcass is made as an exemplary method for adjusting the stiffness. For example, the number of carcass plies to be layered is increased or reduced, whereby the stiffness of the tire can be adjusted. Furthermore, a layered structure of carcass plies is changed, whereby the stiffness of the tire can be adjusted.

A tire for a two-wheeled automotive vehicle is disclosed in JP2005-1629. In the tire, an outer carcass ply is layered over an inner carcass ply. The inner carcass ply and the outer carcass ply are layered into a predetermined layered structure. The stiffness of the entirety of a tread is improved by combination of the layered structure of the carcass and a band layered over the carcass.

A tire for a two-wheeled automotive vehicle is required to have a further improved stiffness, in some cases, depending on the application of the tire. Furthermore, the stiffness needs to be adjusted, in some cases, depending on the application of the tire. For example, a tire for a so-called cruiser is required to have a high stiffness since the cruiser has a weight greater than another two-wheeled automotive vehicle having a similar engine displacement.

The stiffness of the tire can be improved by the number of carcass plies being increased. However, slight adjustment of stiffness by the number of the carcass plies being increased or reduced, is difficult. Furthermore, the increase or reduction of the number of the carcass plies causes transient characteristics of the tire to be greatly changed. Moreover, in the above tire disclosed in JP2005-1629, by the outer carcass ply being further extended to a portion near a core, stiffness of the tire can be improved. In the tire having such a structure, the end portion of the outer carcass ply is disposed near the core. The end portion, of the outer carcass ply, disposed near the core is likely to be exposed on a surface of the tire, and durability of the tire is deteriorated. In the tire, further improvement of stiffness by extending the outer carcass ply is difficult in view of durability.

EP 0 635 383 A1 discloses a tire having the features according to the preamble of claim 1.

EP 2 196 328 A1 discloses a tire according to a related technology.

A tire according to a related technology is also disclosed in EP 2 899 042 A1 wherein, however, an end of a turned-up portion of a first carcass ply is disposed between a main portion of the first carcass ply and a second carcass ply such that the turned-up portion of the first carcass ply, the second carcass ply and the band are layered over each other.

An object of the present invention is to provide a tire, for a two-wheeled automotive vehicle, having excellent stiffness and also exhibiting excellent transient characteristics.

### SUMMARY OF THE INVENTION

This object is achieved by a tire comprising the features of claim 1.

A tire, for a two-wheeled automotive vehicle, according to the present invention includes: a tread; a pair of sidewalls; a pair of beads; a carcass; and a band. Each sidewall extends almost inward from an end of the tread in a radial direction. The beads are disposed inward of the sidewalls, respectively, in an axial direction. The carcass is extended on and between one of the beads and the other of the beads along inner sides of the tread and the sidewalls. The band is disposed between the tread and the carcass in the radial direction, and is layered over the carcass. The carcass includes a first carcass ply and a second carcass ply. The first carcass ply is turned up around the beads from an inner side toward an outer side in the axial direction, and the first carcass ply has a main portion and turned-up portions. The second carcass ply is disposed outward of the main portion in the radial direction, and is extended on and between one of the beads and the other of the beads. End portions of the second carcass ply extend inward in the radial direction. Ends of the second carcass ply are disposed between the beads and the turned-up portions, respectively, in the axial direction. Ends of the turned-up portions are disposed between the main portion and the band. The turned-up portions and the band are layered over each other.

Wb represents a width of the band, and Wj represents a layered width over which each turned-up portion and the band are layered. A ratio of the width Wj to the width Wb is not less than 0.05 and not greater than 0.20.

H1 represents a height from a bead base line to the end of each turned-up portion, and H2 represents a height from the bead base line to the end of the second carcass ply. At this time, preferably, a ratio of the height H2 to the height H1 is not less than 0.05 and not greater than 0.50.

Each bead includes a core and an apex that extends outward from the core in the radial direction. Each end of the second carcass ply is disposed between the core and a corresponding one of the turned-up portions in the axial direction.

Each bead includes a core and an apex that extends outward from the core in the radial direction. An end of the apex is preferably disposed outward of each end of the second carcass ply in the radial direction.

Each bead includes a core and an apex that extends outward from the core in the radial direction. The end of the apex is preferably disposed outward of the tread end Pe in the radial direction.

In the tire according to the present invention, the first carcass ply and the band are layered over each other, whereby stiffness is improved and transient characteristics also become excellent. In the tire, the end of the second carcass ply is layered between the bead and the turned-up portion of the first carcass ply, whereby stiffness is further improved without deteriorating transient characteristics.

### BRIEF DESCRIPTION OF THE DRAWINGS

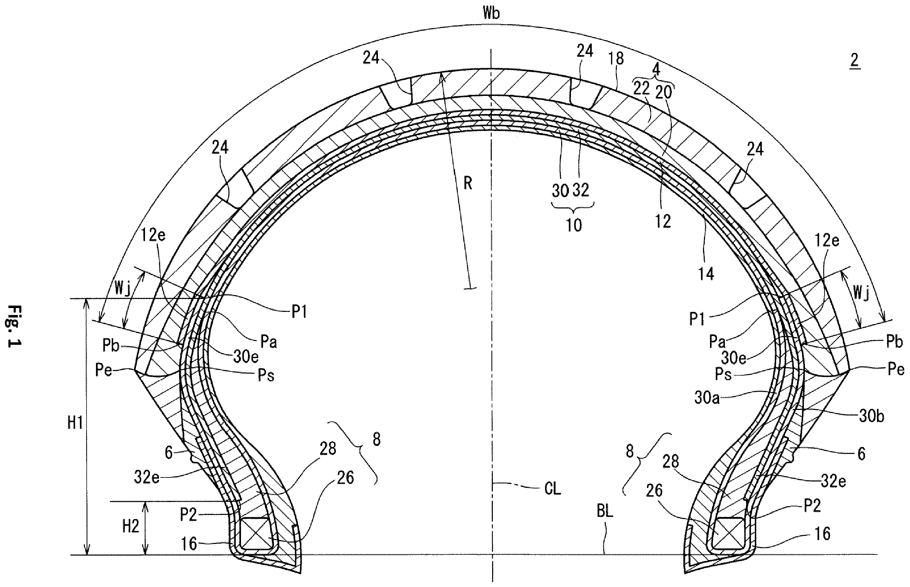

FIG. 1 is a cross-sectional view of a part of a pneumatic tire according to one embodiment of the present invention.

### DESCRIPTION OF THE PREFERRED EMBODIMENTS

The following will describe in detail the present invention based on preferred embodiments with reference where appropriate to the accompanying drawing.

FIG. 1 shows a pneumatic tire 2. In FIG. 1, the up-down direction represents the radial direction of the tire 2, the left-right direction represents the axial direction of the tire 2, and the direction perpendicular to the surface of the drawing sheet represents the circumferential direction of the tire 2. An alternate long and short dash line CL represents the equator plane of the tire 2. The shape of the tire 2 is symmetric about the equator plane except for a tread pattern. A solid line BL represents a bead base line. The bead base line is a line that defines a rim diameter (see JATMA) of a normal rim on which the tire 2 is mounted. The bead base line extends in the axial direction.

The tire 2 includes a tread 4, a pair of sidewalls 6, a pair of beads 8, a carcass 10, a band 12, an inner liner 14, and a pair of chafers 16. The tire 2 is of a tubeless type. The tire 2 is mounted to a front wheel of a two-wheeled automotive vehicle.

The tread 4 projects outward in the radial direction. The tread 4 forms a tread surface 18 that comes into contact with a road surface. The tread surface 18 extends from one of tread ends Pe to the other of the tread ends Pe in the axial direction. The tread 4 includes a base layer 20 and a cap layer 22. The cap layer 22 forms the tread surface 18. The cap layer 22 is layered over the base layer 20. The base layer 20 is disposed inward of the cap layer 22 in the radial direction, and extends along the cap layer 22. The base layer 20 is formed from a crosslinked rubber having excellent adhesiveness. The cap layer 22 is formed from a crosslinked rubber having excellent wear resistance, heat resistance, and grip performance. The tread 4 has grooves 24 formed therein. The tread pattern is formed by the grooves 24.

Each sidewall 6 extends almost inward from the end of the tread 4 in the radial direction. The radially outer end of the sidewall 6 is joined to the tread 4. The sidewall 6 is formed from a crosslinked rubber having excellent cut resistance and weather resistance. The sidewall 6 prevents damage to the carcass 10.

Each bead 8 is disposed inward of the sidewall 6 in the axial direction. The bead 8 includes a core 26, and an apex 28 that extends outward from the core 26 in the radial direction. The core 26 is ring-shaped, and includes a wound non-stretchable wire. A typical material of the wire is steel. The apex 28 is tapered outward in the radial direction. The apex 28 is formed from a highly hard crosslinked rubber.

The carcass 10 includes a first ply 30 as a first carcass ply and a second ply 32 as a second carcass ply. The first ply 30 and the second ply 32 are each extended on and between the beads 8 on both sides, along the tread 4 and the sidewall 6.

The first ply 30 is turned up around the core 26 from the inner side toward the outer side in the axial direction. By the first ply 30 being turned up, the first ply 30 has a main portion 30a and turned-up portions 30b. The main portion 30a is extended on and between the beads 8 on both sides. Each turned-up portion 30b extends outward in the radial direction, along the core 26 and the apex 28.

The second ply 32 is layered over the outer circumferential surface of the main portion 30a of the first ply 30 near the equator plane. The second ply 32 is layered over the axially outer side surface of the bead 8 near the bead 8. An end portion 32e of the second ply 32 extends inward in the radial direction. The second ply 32 is not turned up around the core 26. An end P1 of the turned-up portion 30b of the first ply 30 is disposed outward of an end P2 of the second ply 32 in the radial direction. The end portion 32e is disposed between the bead 8 and the turned-up portion 30b in the axial direction.

The first ply 30 and the second ply 32 each include multiple carcass cords aligned with each other, and topping rubber. An absolute value of a tilt angle of each carcass cord relative to the equator plane is from 60° to 90° in general. In other words, the carcass 10 forms a radial structure. In the tire 2, a direction in which the carcass cord of the first ply 30 is tilted relative to the equator plane is opposite to a direction in which the carcass cord of the second ply 30 is tilted relative to the equator plane. The carcass cord is formed from an organic fiber. Preferable examples of the organic fiber include rayon fibers, polyester fibers, nylon fibers, polyethylene naphthalate fibers, and aramid fibers.

The band 12 is disposed outward of the carcass 10 in the radial direction. The band 12 is disposed inward of the tread 4 in the radial direction. The band 12 extends along the tread 4 from one of axial ends Pb to the other of the axial ends Pb. The band 12 reinforces the carcass 10.

The band 12 includes a band cord and topping rubber, which are not shown. The band cord is helically wound from one of the ends Pb to the other of the ends Pb. The band cord extends substantially in the circumferential direction. A tilt angle of the band cord relative to the circumferential direction is not greater than 5°, and more preferably not greater than 2°. A material of the band cord is steel. An organic fiber may be used for the band cord. Preferable examples of the organic fiber include nylon fibers, polyester fibers, rayon fibers, polyethylene naphthalate fibers, and aramid fibers.

The inner liner 14 is disposed inward of the carcass 10. The inner liner 14 is formed from a crosslinked rubber having excellent airtightness. A typical base rubber of the inner liner 14 is an isobutylene-isoprene-rubber or halogenated isobutylene-isoprene-rubber. The inner liner 14 maintains the internal pressure of the tire 2. The chafer 16 is disposed near the bead 8. When the tire 2 is mounted on a not-illustrated rim, the chafer 16 contacts with the rim. By the contact, a portion near the bead 8 is protected. The chafer 16 is formed from, for example, a fabric and a rubber impregnated into the fabric.

A double-headed arrow H1 represents a height of the end P1 of the turned-up portion 30b of the first ply 30. A double-headed arrow H2 represents a height of the end P2 of the second ply 32. The height H1 and the height H2 are each measured as a distance in a straight line from the bead base line in the radial direction.

A double-headed arrow Wb represents a width of the band 12. The width Wb represents a distance from one of the axial ends Pb to the other of the axial ends Pb. The width Wb is measured along the band 12. A double-headed arrow Wj represents a layered width over which the turned-up portion 30b and the band 12 are layered. The layered width Wj represents a distance from the end P1 of the turned-up portion 30b to the end Pb of the band 12. The layered width Wj is measured along a boundary between the turned-up portion 30b and the band 12 which are layered over each other.

A single-headed arrow R represents a curvature radius of the tread surface 18 at the equator plane. The curvature radius R of the tire 2 for a two-wheeled automotive vehicle is less than a curvature radius in a four-wheeled automotive vehicle. Thus, a rider is allowed to easily tilt the two-wheeled automotive vehicle inward in cornering. By the tilting, cornering of the two-wheeled automotive vehicle is facilitated. The curvature radius R is not less than 50 mm and not greater than 150 mm in general.

In the tire 2, the end portion 32e of the second ply 32 is layered outward of the apex 28 in the axial direction. The end portion 32e of the second ply 32 is disposed between the apex 28 and the turned-up portion 30b in the axial direction. An end portion 30e of the turned-up portion 30b is layered outward of the second ply 32 in the axial direction. An end portion 12e of the band 12 is layered outward of the end portion 30e. The end portion 30e of the turned-up portion 30b is disposed between the second ply 32 and the band 12.

The tire 2 is mounted to a front wheel of a two-wheeled automotive vehicle. In the tire 2, the end P2 of the second ply 32 is disposed outward of the apex 28 in the axial direction. The apex 28 is formed from a highly hard crosslinked rubber. When the tire 2 is under a radially inward load, a portion, of the tire 2, inward of the apex 28 in the axial direction is compressed and deformed, and a portion, of the tire 2, outward of the apex 28 in the axial direction is expanded and deformed. The turned-up portion 30b and the second ply 32 include carcass cords, and can inhibit the expansion and deformation. The turned-up portion 30b and the second ply 32 are disposed outward of the apex 28 in the axial direction, and contribute to inhibition of expansion and deformation. The tire 2 has excellent stiffness.

The end P2 of the second ply 32 is disposed between the apex 28 and the turned-up portion 30b. The end P2 of the second ply 32 is covered with the turned-up portion 30b. Thus, also when the second ply 32 is disposed near the core 26, the end P2 is inhibited from being exposed. In the tire 2, the end P2 is disposed near the core 26 without reducing durability. In the tire 2, the second ply 32 extends to a portion near the core 26, and the tire 2 can exhibit high stiffness.

In the tire 2, the turned-up portion 30b is layered over the band 12. The end P1 of the turned-up portion 30b is disposed between the main portion 30a and the band 12. In the tire 2, the end portion 30e of the first ply 30 is fixed by the band 12. The band 12 and the first ply 30 are layered integrally over each other. In the tire 2, stiffness of the tread 4 and stiffness of the pair of sidewalls 6 are integrally improved.

The turned-up portion 30b and the band 12 are layered over each other to integrally improve stiffness. Therefore, a ground contact region can smoothly shift between the axially center region of the tread surface 18 and the axially outer region of the tread surface 18. The tire 2 has excellent rolling transient characteristics (ground-contact feeling transient characteristic in the case of a camber angle being increased or reduced). The tire 2 contributes to improvement of transient characteristics between straight running and cornering of the two-wheeled automotive vehicle. The tire 2, in which the layered width Wj over which the turned-up portion 30b and the band 12 are layered is great, exhibits excellent transient characteristics. In this viewpoint, a ratio (Wj/Wb) of the width Wj to the width Wb of the band 12 is preferably not less than 0.05.

Meanwhile, in the tire 2 in which the ratio (Wj/Wb) is excessively great, the tread 4 has excessively high stiffness. In the tire 2, when the tread surface 18 contacts with the ground, appropriate deformation of the tread 4 is difficult. In the tire 2, when the two-wheeled automotive vehicle is tilted, a ground contact region shifts fast from the center region of the tread surface 18 to the outer region of the tread surface 18. In the tire 2, smooth shifting of the ground contact region of the tread surface 18 is difficult. In the tire 2, transient characteristics are poor. In view of the transient characteristics, the ratio (Wj/Wb) is preferably not greater than 0.20, more preferably not greater than 0.15, and particularly preferably not greater than 0.10.

In the tire 2 in which a ratio (H2/H1) of the height H2 of the end P2 of the second ply 32 relative to the height H1 of the end P1 of the turned-up portion 30b is small, a layered width over which the turned-up portion 30b and the second ply 32 are layered, is great. In the tire 2, the sidewall 6 has excellent stiffness. The tire 2 provides excellent steering stability in cornering. In this viewpoint, the ratio (H2/H1) is preferably not greater than 0.50, more preferably not greater than 0.30, and particularly preferably not greater than 0.15. When the end portion 32e of the second ply 32 is layered outward of the core 26 in the axial direction, stiffness can be further improved. In this viewpoint, the end P2 of the second ply 32 is preferably disposed outward of the core 26 in the axial direction. Meanwhile, when the tire 2 has an excessively small ratio (H2/H1), productivity is poor. In this viewpoint, the ratio (H2/H1) is not less than 0.05.

In the tire 2, an end Pa that is the radially outer end of the apex 28 is disposed outward of the end P2 of the second ply 32 in the radial direction. The end portion 32e of the second ply 32 is disposed outward of the apex 28 in the axial direction. Thus, the end portion 32e inhibits the sidewall 6 from being expanded and deformed. The second ply 32 contributes to improvement of stiffness of the sidewall 6. In view of improvement of stiffness of the sidewall 6, the end Pa of the apex 28 is more preferably disposed outward of a radially outer end Ps of the sidewall 6.

From the viewpoint of improvement of stiffness of the tire 2, the carcass cord of the first ply 30 and the carcass cord of the second ply 32 preferably intersect each other. An angle at which the carcass cord of the first ply 30 is tilted relative to the equator plane is preferably different from an angle at which the carcass cord of the second ply 32 is tilted relative to the equator plane. The tilt angles may not necessarily be set such that a direction in which the carcass ply of the first ply 30 is tilted is opposite to a direction in which the second carcass ply is tilted, with respect to the equator plane. The absolute values of the tilt angles may not necessarily be equal to each other.

In the tire 2, the turned-up portion 30b of the first ply 30 and the band 12 are layered to integrally improve stiffness of the tread 4 and the stiffness of the sidewall 6. Furthermore, the second ply 32 is disposed inward of the turned-up portion 30b and the band 12, whereby sudden change of stiffness at the end P2 of the second ply 32, is inhibited.

In the tire 2, stiffness is improved by the second ply 32. When the height H2 of the end P2 of the second ply 32 is small, stiffness is improved. When the height H2 is increased, stiffness is reduced. In the tire 2, adjustment of the height H2 can allow stiffness of the tire 2 to be easily adjusted. In the tire 2, stiffness can be easily adjusted according to the application.

In the tire 2, the carcass 10 merely includes one first ply 30 and one second ply 32. Stiffness of the tire 2 is greatly influenced by change of the height H2 of the end P2 of the second ply 32. In the tire 2, by the height H2 being adjusted, stiffness is more easily adjusted.

In the present invention, the dimensions and angles of the components of the tire 2 are measured in a state where the tire 2 is mounted on a normal rim, and the tire 2 is inflated with air to a normal internal pressure. During the measurement, no load is applied to the tire 2. In the description herein, the normal rim represents a rim which is specified according to the standard with which the tire 2 complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure.

### EXAMPLES

Hereinafter, effects of the present invention will become apparent according to examples. However, the present invention should not be restrictively construed based on the description of examples.

### [Example 1]

A tire shown in FIG. 1 was produced. The size of the tire was 120/70ZR17M/C. The tire was mounted to a front wheel of a two-wheeled automotive vehicle. A first carcass ply, a second carcass ply, a band, and a ratio (Wj/Wb) of the tire were as indicated below in Table 1.

The first carcass ply and the second carcass ply each had a cord structure in which two 1840-dtex filaments were stranded. The band had a 3×3 stranded cord structure in which three strands each obtained by three filaments being first-stranded, were second-stranded. A cord density was represented as ends (unit: cords/5 cm) representing the number of cords per a width of 5 cm in the axial direction.

### [Comparative example 1]

In the tire, the end of the second carcass ply was disposed between the apex, and the main portion of the first carcass ply in the axial direction. The other structure of the tire was the same as for example 1. In the present invention, the carcass structure of the tire is called a 1+1-0 structure.

### [Comparative example 2]

A conventional tire was prepared. In the tire, the first carcass ply was turned up around the core from the inner side toward the outer side in the axial direction. The first carcass ply had a main portion and a pair of turned-up portions. The second carcass ply was layered outward of the first carcass ply. The second carcass ply was not turned up around the core. The end portion of the second carcass ply extended inward in the radial direction. The end portion of the second carcass ply was layered outward of the turned-up portion of the first carcass ply in the axial direction. In the present invention, the carcass structure of the tire is called a 1-1 structure. The other structure of the tire was the same as for example 1.

### [Examples 2 and 3]

Tires of examples 2 and 3 were each obtained in the same manner as for example 1 except that the height H2 of the second carcass ply was as indicated in Table 1.

### [Comparative example 3]

The height H1 of the turned-up portion of the first carcass ply was lower than that in example 1. The turned-up portion and the band were not layered over each other. The other structure of the tire was the same as for example 2. Thus, the tire of comparative example 3 was obtained.

### [Evaluation of performance]

A two-wheeled automotive vehicle (cruiser) having an engine displacement of 1300 cc (cm³) was prepared. Each tire was mounted on a MT3.50 normal rim, and was mounted to a front wheel of the two-wheeled automotive vehicle. The tire was inflated with air to an internal pressure of 250 kPa. A commercially available tire was mounted to a rear wheel as it was. The two-wheeled automotive vehicle was caused to run on a road having an asphalt road surface. A rider made sensory evaluation for cornering performance, stiffness feeling, and rolling transient characteristics. The results are indicated below in Table 1 as an index with the index of comparative example 1 being 100. The greater the value of the index is, the better the evaluation is.

**Table 1 Evaluation result**

| | | Compa. example 1 | Compa. example 2 | Example 1 | Example 2 | Example 3 | Compa. example 3 |
|---|---|---|---|---|---|---|---|
| Structure | | 1+1-0 | 1-1 | FIG. 1 | FIG. 1 | FIG. 1 | FIG. 1 |
| First carcass ply | | | | | | | |
| | Material | rayon | rayon | rayon | rayon | rayon | rayon |
| | Fineness (dtex) | 2/1840 | 2/1840 | 2/1840 | 2/1840 | 2/1840 | 2/1840 |
| | The number of first carcass plies | 1 | 1 | 1 | 1 | 1 | 1 |
| | Height H1 (mm) | 45 | 45 | 45 | 45 | 45 | 35 |
| | Tilt angle (°) | 70 | 70 | 70 | 70 | 70 | 70 |
| Second carcass ply | | | | | | | |
| | Material | rayon | rayon | rayon | rayon | rayon | rayon |
| | Fineness (dtex) | 2/1840 | 2/1840 | 2/1840 | 2/1840 | 2/1840 | 2/1840 |
| | The number of second carcass plies | 1 | 1 | 1 | 1 | 1 | 1 |
| | Height H2 (mm) | 20 | 20 | 20 | 10 | 5 | 10 |
| | Tilt angle (°) | -70 | -70 | -70 | -70 | -70 | -70 |
| Band | | | | | | | |
| | Material | steel | steel | steel | steel | steel | steel |
| | The number of bands | 1 | 1 | 1 | 1 | 1 | 1 |
| | Structure | 3x3/0.17 | 3x3/0.17 | 3x3/0.17 | 3x3/0.17 | 3x3/0.17 | 3x3/0.17 |
| | Width Wb (mm) | 140 | 140 | 140 | 140 | 140 | 140 |
| | Density (cords/5 cm) | 35 | 35 | 35 | 35 | 35 | 35 |
| Ratio Wj/Wb | | 0.06 | 0.06 | 0.06 | 0.06 | 0.06 | 0 |
| Cornering performance | | 100 | 105 | 105 | 110 | 110 | 90 |
| Stiffness feeling | | 100 | 110 | 115 | 120 | 125 | 85 |
| Rolling transient characteristics | | 100 | 100 | 100 | 115 | 115 | 85 |

As indicated in Table 1, evaluation is higher in the tires of examples than in the tires of comparative examples. Furthermore, Table 1 indicates that, in the tires of examples 1 to 3, the less the height H2 is, the higher stiffness is. In the tires, by the height H2 of the second carcass ply being adjusted, the stiffness is easily adjusted. The evaluation result clearly indicates that the present invention is superior.

The method described above is widely applicable to tires for two-wheeled automotive vehicles. The tire is suitable particularly to application that requires stiffness, for example, suitable as tires for cruisers.

The foregoing description is in all aspects illustrative, and various modifications can be devised without departing from the essential features of the invention, as defined in the appended claims.

## Claims

1. A tire (2) for a two-wheeled automotive vehicle, the tire (2) comprising:
a tread (4);
a pair of sidewalls (6);
a pair of beads (8);
a carcass (10); and
a band (12), wherein
each sidewall (6) extends almost inward from an end (Pe) of the tread (4) in a radial direction,
the beads (8) are disposed inward of the sidewalls (6), respectively, in an axial direction,
the carcass (10) is extended on and between one of the beads (8) and the other of the beads (8) along inner sides of the tread (4) and the sidewalls (6),
the band (12) is disposed between the tread (4) and the carcass (10) in the radial direction, and is layered over the carcass (10),
the carcass (10) includes a first carcass ply (30) and a second carcass ply (32),
the first carcass ply (30) is turned up around the beads (8) from an inner side toward an outer side in the axial direction, and the first carcass ply (30) has a main portion (30a) and turned-up portions (30b),
the second carcass (32) ply is disposed outward of the main portion (30a) in the radial direction, and is extended on and between one of the beads (8) and the other of the beads (8),
end portions (32e) of the second carcass ply (32) extend inward in the radial direction, and ends (P2) of the second carcass ply (32) are disposed between the beads (8) and the turned-up portions (30b), respectively, in the axial direction,
ends (P1) of the turned-up portions (30b) are disposed between the main portion (30a) and the band (12), and the turned-up portions (30b) and the band (12) are layered over each other,
**characterized in that**
a ratio of a width Wj to a width Wb is not less than 0.05 and not greater than 0.20,
wherein the width Wb represents a distance from one of axial ends (Pb) of the band (12) to the other of the axial ends (Pb) of the band (12),
the width Wb is measured along the band (12),
Wj represents a layered width over which each turned-up portion (30b) and the band (12) are layered, and
the layered width Wj is measured along a boundary between the turned-up portion (30b) and the band (12) which are layered over each other.

2. The tire (2) according to claim 1, wherein
when H1 represents a height from a bead base line (BL) to the end of each turned-up portion (30b), and H2 represents a height from the bead base line (BL) to the end (P2) of the second carcass ply (32),
a ratio of the height H2 to the height H1 is not less than 0.05 and not greater than 0.50.

3. The tire (2) according to any one of claims 1 or 2, wherein
each bead (8) includes a core (26) and an apex (28) that extends outward from the core (26) in the radial direction, and
each end (P2) of the second carcass ply (32) is disposed between the core (26) and a corresponding one of the turned-up portions (30b) in the axial direction.

4. The tire (2) according to any one of claims 1 to 3, wherein
each bead (8) includes a core (26) and an apex (28) that extends outward from the core (26) in the radial direction, and
an end (Pa) of the apex (28) is disposed outward of each end (P2) of the second carcass ply (32) in the radial direction.

5. The tire (2) according to claim 4, wherein the end (Pa) of the apex (28) is disposed outward of the tread end (Pe) in the radial direction.

## Patentansprüche

1. Reifen (2) für ein zweirädriges Kraftfahrzeug, wobei der Reifen (2) umfasst:
eine Lauffläche (4);
ein Paar Seitenwände (6);
ein Paar Wülste (8);
eine Karkasse (10); und
ein Band (12), wobei
sich jede Seitenwand (6) von einem Ende (Pe) der Lauffläche (4) in einer radialen Richtung nahezu nach innen erstreckt,
die Wülste (8) in einer axialen Richtung jeweils innerhalb der Seitenwände (6) angeordnet sind,
sich die Karkasse (10) an einer der Wülste (8) und der anderen der Wülste (8) sowie zwischen diesen entlang Innenseiten der Lauffläche (4) und der Seitenwände (6) erstreckt,
das Band (12) in der radialen Richtung zwischen der Lauffläche (4) und der Karkasse (10) angeordnet ist und über der Karkasse (10) geschichtet ist,
die Karkasse (10) eine erste Karkassenlage (30) und eine zweite Karkassenlage (32) aufweist,
die erste Karkassenlage (30) in der axialen Richtung von einer Innenseite in Richtung einer Außenseite um die Wülste (8) herum umgeschlagen ist und die erste Karkassenlage (30) einen Hauptabschnitt (30a) und umgeschlagene Abschnitte (30b) aufweist,
die zweite Karkassenlage (32) in der radialen Richtung außerhalb des Hauptabschnitts (30a) angeordnet ist und sich an einer der Wülste (8) und der anderen der Wülste (8) sowie zwischen diesen erstreckt,
sich Endabschnitte (32e) der zweiten Karkassenlage (32) in der radialen Richtung nach innen erstrecken und Enden (P2) der zweiten Karkassenlage (32) in der axialen Richtung jeweils zwischen den Wülsten (8) und den umgeschlagenen Abschnitten (30b) angeordnet sind,
Enden (P1) der umgeschlagenen Abschnitte (30b) zwischen dem Hauptabschnitt (30a) und dem Band (12) angeordnet sind und die umgeschlagenen Abschnitte (30b) sowie das Band (12) übereinander geschichtet sind,
**dadurch gekennzeichnet, dass**
ein Verhältnis einer Breite Wj zu einer Breite Wb nicht kleiner als 0,05 und nicht größer als 0,20 ist,
wobei die Breite Wb eine Distanz von einem axialer Enden (Pb) des Bandes (12) bis zu dem anderen der axialen Enden (Pb) des Bandes (12) repräsentiert,
die Breite Wb entlang des Bandes (12) gemessen wird,
Wj eine geschichtete Breite repräsentiert, über welche jeder umgeschlagene Abschnitt (30b) und das Band (12) geschichtet sind, und
die geschichtete Breite Wj entlang einer Grenze zwischen dem umgeschlagenen Abschnitt (30b) und dem Band (12) gemessen wird, die übereinander geschichtet sind.

2. Reifen (2) nach Anspruch 1, wobei
dann, wenn H1 eine Höhe von einer Wulstbasislinie (BL) bis zu dem Ende jedes umgeschlagenen Abschnitts (30b) repräsentiert und H2 eine Höhe von der Wulstbasislinie (BL) bis zu dem Ende (P2) der zweiten Karkassenlage (32) repräsentiert,
ein Verhältnis der Höhe H2 zu der Höhe H1 nicht kleiner als 0,05 und nicht größer als 0,50 ist.

3. Reifen (2) nach einem der Ansprüche 1 oder 2, wobei
jede Wulst (8) einen Kern (26) und eine Spitze (28) aufweist, die sich in der radialen Richtung von dem Kern (26) nach außen erstreckt, und
jedes Ende (P2) der zweiten Karkassenlage (32) in der axialen Richtung zwischen dem Kern (26) und einem entsprechenden der umgeschlagenen Abschnitte (30b) angeordnet ist.

4. Reifen (2) nach einem der Ansprüche 1 bis 3, wobei
jede Wulst (8) einen Kern (26) und eine Spitze (28) aufweist, die sich in der radialen Richtung von dem Kern (26) nach außen erstreckt, und
ein Ende (Pa) der Spitze (28) in der radialen Richtung außerhalb jedes Endes (P2) der zweiten Karkassenlage (32) angeordnet ist.

5. Reifen (2) nach Anspruch 4, wobei das Ende (Pa) der Spitze (28) in der radialen Richtung außerhalb des Laufflächenendes (Pe) angeordnet ist.

## Revendications

1. Pneumatique (2) pour un véhicule automobile à deux roues, le pneumatique (2) comprenant :
une bande de roulement (4) ;
une paire de parois latérales (6) ;
une paire de talons (8) ;
une carcasse (10) ; et
une bande (12),
dans lequel
chaque paroi latérale (6) s'étend pratiquement vers l'intérieur depuis une extrémité (Pe) de la bande de roulement (4) dans une direction radiale,
les talons (8) sont disposés vers l'intérieur des parois latérales (6), respectivement, dans une direction axiale,
la carcasse (10) s'étend sur et entre l'un des talons (8) et l'autre des talons (8) le long des côtés intérieurs de la bande de roulement (4) et des parois latérales (6),
la bande (12) est disposée entre la bande de roulement (4) et la carcasse (10) dans la direction radiale, et est posée en couche par-dessus la carcasse (10),
la carcasse (10) inclut une première nappe de carcasse (30) et une seconde nappe de carcasse (32),
la première nappe de carcasse (30) est retroussée vers le haut autour des talons (8) depuis un côté intérieur vers un côté extérieur dans la direction axiale, et la première nappe de carcasse (30) possède une portion principale (30a) et des portions retroussées vers le haut (30b),
la seconde nappe de carcasse (32) est disposée à l'extérieur de la portion principale (30a) dans la direction radiale, et s'étend sur et entre l'un des talons (8) et l'autre des talons (8),
les portions terminales (32e) de la seconde nappe de carcasse (32) s'étendent vers l'intérieur dans la direction radiale, et des extrémités (P2) de la seconde nappe de carcasse (32) sont disposées entre les talons (8) et les portions retroussées vers le haut (30b), respectivement, dans la direction axiale,
des extrémités (P1) des portions retroussées vers le haut (30b) sont disposées entre la portion principale (30a) et la bande (12), et les portions retroussées vers le haut (30b) et la bande (12) sont disposées en couches les unes sur les autres,
**caractérisé en ce que**
un rapport d'une largeur Wj sur une largeur Wb n'est pas inférieur à 0,05 et n'est pas supérieur à 0,20,
dans lequel la largeur Wb représente une distance depuis l'une des extrémités axiales (Pb) de la bande (12) jusqu'à l'autre des extrémités axiales (Pb) de la bande (12),
la largeur Wb est mesurée le long de la bande (12),
Wj représente une largeur de couche sur laquelle chaque portion retroussée vers le haut (30b) et la bande (12) sont disposées en couches, et
la largeur de couche Wj est mesurée le long d'une frontière entre la portion retroussée vers le haut (30b) et la bande (12) qui sont disposées en couches l'une sur l'autre.

2. Pneumatique (2) selon la revendication 1, dans lequel
quand H1 représente une hauteur depuis une ligne de base de talon (BL) jusqu'à l'extrémité de chaque portion retroussée vers le haut (30b), et H2 représente une hauteur depuis la ligne de base de talon (BL) jusqu'à l'extrémité (P2) de la seconde nappe de carcasse (32),
un rapport de la hauteur H2 sur la hauteur H1 n'est pas inférieur à 0,05 et n'est pas supérieur à 0,50.

3. Pneumatique (2) selon l'une quelconque des revendications 1 ou 2, dans lequel
chaque talon (8) inclut une âme (26) et un sommet (28) qui s'étend vers l'extérieur depuis l'âme (26) dans la direction radiale, et
chaque extrémité (P2) de la seconde nappe de carcasse (32) est disposée entre l'âme (26) et une portion correspondante des portions retroussées vers le haut (30b) dans la direction axiale.

4. Pneumatique (2) selon l'une quelconque des revendications 1 à 3, dans lequel
chaque talon (8) inclut une âme (26) et un sommet (28) qui s'étend vers l'extérieur depuis l'âme (26) dans la direction radiale, et
une extrémité (Pa) du sommet (28) est disposée à l'extérieur de chaque extrémité (P2) de la seconde nappe de carcasse (32) dans la direction radiale.

5. Pneumatique (2) selon la revendication 4, dans lequel l'extrémité (Pa) du sommet (28) est disposée à l'extérieur de l'extrémité de roulement (Pe) dans la direction radiale.
